# EUROPÄISCHE PATENTANMELDUNG

(11) **EP 1 602 427 A1**
(43) Veröffentlichungstag der Anmeldung: **07.12.2005**
(21) Anmeldenummer: 05405318.6
(22) Anmeldetag: 27.04.2005
(51) Int. Cl.: B23B 31/20

(54) **Spanneinrichtung mit einem Spannfutter und einer daran festspannbaren Spannzange**

(30) Priorität: 04.05.2004 CH 7862004
(71) Anmelder: Erowa AG, CH-5734 Reinach (CH)
(72) Erfinder: Kramer, Dietmar, 8114 Dänikon (CH)
(74) Vertreter: Rottmann, Maximilian

(57) **Zusammenfassung**

Die Spanneinrichtung (10) weist ein Spannfutter (1) und eine daran festspannbare Spannzange (2) auf. Im Innern der Spannzange (2) ist eine Hülse (3) angeordnet, welche den Z-Anschlag für ein an der Spannzange (2) zu fixierendes Werkstück bildet. Die Hülse (3) ist von der Spannzange (2) entkoppelt, indem zwischen der Hülse (3) und der Spannzange (2) ein ringförmiger Spalt (9) verbleibt. Das Spannfutter (1) ist mit vier Zentrierzapfen (12a, 12b, 12c, 12d) versehen. Sowohl die Spannzange (2) wie auch die Hülse (3) sind mit je vier Zentriernuten (26a, 26b, 26c, 26d; (37a, 37b, 37c, 37d) versehen, welche mit den am Spannfutter (1) angeordneten Zentrierzapfen (12a, 12b, 12c, 12d) bezüglich der Lage und Ausbildung korrespondieren. Beim Festspannen der Spannzange (2) und der Hülse (3) am Spannfutter (1) werden diese durch die in die Zentriernuten (26a, 26b, 26c, 26d; 37a, 37b, 37c, 37d) eingreifenden Zentrierzapfen (12a, 12b, 12c, 12d) in X- und Y-Richtung wie auch bezüglich der Winkellage um die Z-Achse positioniert. Zur Positionierung in Z-Richtung sind die Spannzange (2) und die Hülse (3) mit je einer kreisringförmig verlaufenden Stirnfläche (32, 41) versehen, die beim Festspannen an Z-Auflagen (13a, 13b, 13c, 13d) des Spannfutters (1) aufzuliegen kommen.

## Beschreibung

Die vorliegende Erfindung bezieht sich auf eine gemäss dem Oberbegriff des Anspruchs 1 ausgebildete Spanneinrichtung mit einem Spannfutter und einer daran festspannbaren Spannzange.

Unter dem Begriff Spannzange wird im vorliegenden Fall eine geschlitzte, mit einem konischen Abschnitt versehene Spannhülse verstanden, welche einen Gegenstand, insbesondere ein zu bearbeitendes Werkstück, durch Einziehen oder Eindrücken des konischen Abschnitts in ein entsprechendes Gegenstück, festklemmt bzw. festspannt. Gattungsgemässe Spannzangen kommen beispielsweise an Drehbänken zum Einsatz, wo sie mittels eines Gewindes in eine Spindel eingeschraubt werden. Ein grundsätzlicher Nachteil der konventionellen Spannzangen anhaftet besteht darin, dass sowohl deren Winkellage um die Längsachse, -Z-Achse-, wie auch deren Position in Richtung der Längsachse nicht oder zumindest nicht exakt definiert ist. Bei der Bearbeitung von rotationssymmetrischen Werkstücken auf einer Drehbank ist dies von untergeordneter Bedeutung. Andererseits sollen jedoch vermehrt auch Werkstücke mittels Spannzangen an Bearbeitungsmaschinen fixiert werden, die nicht rotationssymmetrisch ausgebildet sind und bei denen es neben einer exakten Positionierung in X- und Y-Richtung auch auf eine genaue Positionierung bezüglich der Winkellage um die Z-Achse wie auch in Richtung der Z-Achse der Spannzange ankommt.

Um Spannzangen in X-, Y- und Z-Richtung wie auch bezüglich der Winkellage um die Z-Achse exakt aufspannen zu können, ist man dazu übergegangen, die jeweilige Spannzange auf einer mit Zentrierelementen versehenen Palette zu befestigen. Die Palette ihrerseits kann dann an einem Spannfutter fixiert werden, welches mit zu der Palette korrespondierenden Zentrierelementen versehen ist.

Aus der FR-A-2 694 222 ist eine mit einer Spannzange versehene Spanneinrichtung bekannt, welche ein Werkzeughalter-Organ, vorzugsweise in Form einer rohrförmigen Muffe; eine scheibenförmige Muffe, die mit dem Werkzeughalter-Organ verbunden werden kann; und eine Vorrichtung, welche in der Lage ist, durch die Maschine zur Rotation gebracht zu werden und die genannte scheibenförmige Muffe in Rotation zu versetzen, aufweist. Dabei weist das Werkzeughalter-Organ, welches als hohles Drehelement, das an seinem Ende geschlossen ist und in die scheibenförmige Muffe eingreift, zwei axial ausgerichtete Teile auf, von denen das eine zur Aufnahme des Endes eines Bohrers ausgebildet ist, während das andere zur Aufnahme des Endes eines Gewindebohrers zum Gewindeschneiden in einer durch den genannten Bohrer erzeugten Ausbohrung ausgebildet ist. Aus dieser Veröffentlichung ergeben sich keinerlei Anhaltspunkte für eine genau Positionierung des Werkzeugs oder eines Werkstücks in X- und Y-Richtung. Aber auch über bezüglich einer Z-Positionierung des Werkzeugs oder eines Werkstücks ergeben sich keine Anhaltspunkte.

Die Aufgabe der Erfindung besteht nun darin, eine gemäss dem Oberbegriff des Patentanspruchs 1 ausgebildete Spanneinrichtung zu schaffen, welche ein genaues Positionieren eines Werkstücks oder Werkzeugs in der Spannzange auch in Z-Richtung ermöglicht.

Diese Aufgabe wird mit einer Spanneinrichtung gelöst, welche mit den im Kennzeichen des Anspruchs 1 angeführten Merkmalen versehen ist.

Indem die Spanneinrichtung mit zumindest einem von der Spannzange entkoppelten Mittel zum Bilden einer Z-Auflage für ein in der Spannzange festspannbares Werkstück oder Werkzeug versehen ist, wird die grundsätzliche Voraussetzung für eine genaue Z-Positionierung des Werkstücks oder Werkzeugs geschaffen, da die durch die Spannzange beim Festklemmen des Werkstücks in radialer und in axialer Richtung auf selbiges ausgeübten Kräfte keinen Einfluss auf dessen Z-Positionierung haben.

Bevorzugte Ausführungsformen des Erfindungsgegenstandes sind in den abhängigen Ansprüchen 2 bis 21 umschrieben.

Im folgenden wird ein Ausführungsbeispiel der erfindungsgemässen Einrichtung unter Bezugnahme auf die beiliegenden Zeichnungen näher erläutert. In den Zeichnungen zeigen:
- Fig. 1: eine Explosionsdarstellung einer ein Spannfutter sowie eine Spannzange umfassenden Spanneinrichtung;
- Fig. 2: eine Ansicht von unten auf die Spannzange sowie eine Hülse und einen Spannring, und
- Fig. 3: einen Längsschnitt durch das Spannfutter sowie die daran festgespannte Spannzange.

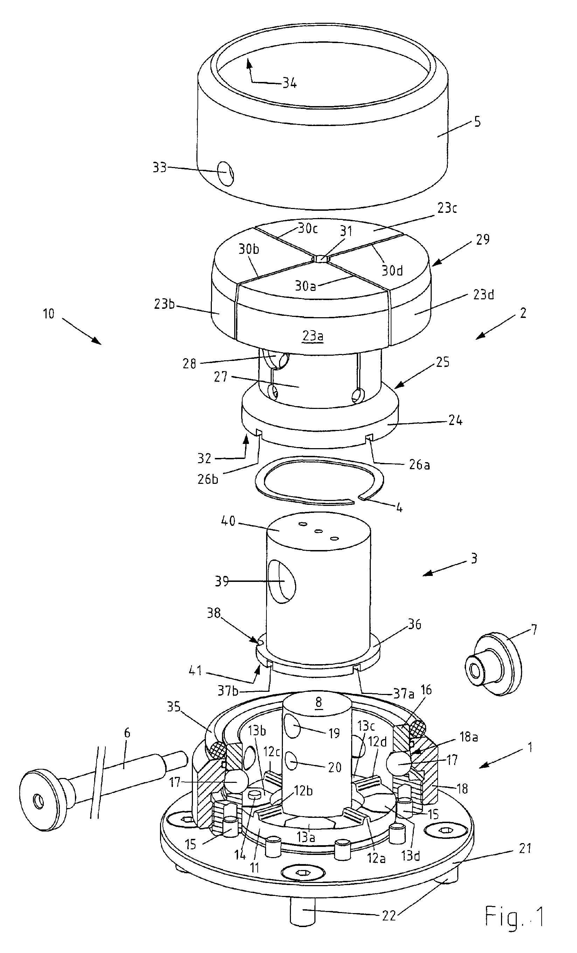

Aus der Fig. 1 ist eine schematisch dargestellte Spanneinrichtung 10 mit einem Spannfutter 1 und einer daran festspannbaren Spannzange 2 ersichtlich. Als weitere Einzelelemente sind eine Hülse 3, ein Federelement 4, ein Spannring 5, eine Spannwelle 6 mit einem Befestigungselement 7 sowie eine Zugstange 8 ersichtlich.

Das Spannfutter 1 ist mit einem kreisringförmigen Vorsprung 11 versehen, auf dem vier Zentrierzapfen 12a, 12b, 12c, 12d angeordnet sind. Zwischen zwei Zentrierzapfen ist jeweils eine als Z-Auflage dienende Auflagefläche 13a, 13b, 13c, 13d angeordnet. Aus dem Zentrum der einen Auflagefläche 13b steht ein Indexierstift 14 vor. Der Vorsprung 11 wird auf der Aussenseite von einem ringförmig ausgebildeten Kugelhalter 16 umfasst, der mit einer Vielzahl von Spannkugeln 17 versehen ist und ein Aussengewinde aufweist. Auf das Aussengewinde des Kugelhalters 16 ist eine Überwurfmutter 18 aufgeschraubt, welche auf der Innenseite mit einer konisch zulaufenden Druckfläche 18a zum radialen Verschieben der Spannkugeln 17 versehen ist. Das Spannfutter 1 selber ist auf einer Platte 21 befestigt, welche ihrerseits mittels Schrauben 22 an einer maschinenseitig vorzusehenden Aufnahme befestigt wird. Im Innern des Spannfutters 1 ist die mit einer radialen Durchgangsbohrung 19 sowie einer Ölaustrittsbohrung 20 versehene Zugstange 8 ersichtlich. Die Zugstange 8 ist ebenfalls maschinenseitig vorzusehen. Der Kugelhalter 16 ist mittels Schrauben 15 an der Platte 21 befestigt. Auf der Oberseite der Überwurfmutter 18 ist ein Dichtring 35 angeordnet.

Die eigentliche Spannzange 2 ist hohlzylindrisch ausgebildet, so dass in ihrem Innern die Hülse 3 aufgenommen werden kann. Der Aussendurchmesser der Hülse 3 ist dabei geringfügig kleiner als der Innendurchmesser der Spannzange 2, so dass zwischen der Hülse 3 und der Spannzange 2 ein radialer, ringförmiger Spalt verbleibt, der sicherstellt, dass die die Z-Auflage bildende Hülse 3 von der Spannzange 2 entkoppelt ist. Die Spannzange 2 ist in bekannter Weise mit vier Schlitzen 30a, 30b, 30c, 30d versehen, welche den Spannzangenvorderteil in vier Klemmbacken 23a, 23b, 23c, 23d unterteilen. In den Spannzangenvorderteil ist eine zentrale Bohrung 31 eingelassen, deren Durchmesser den Anforderungen entsprechend gewählt wird. Der Spannzangenvorderteil ist mit einer umlaufenden Abschrägung 29 versehen. Auf ihrer Rückseite weist die Spannzange 2 eine umlaufende Schulter 24 auf, die auf der Unterseite eine kreisringförmig verlaufende Stirnfläche 32 bildet. Die Stirnfläche 32 dient als Z-Anschlag beim Fixieren der Spannzange 2 am Spannfutter 1. Die Schulter 24 ist mit einer schräg verlaufenden Druckfläche 25 versehen, an welcher die Spannkugeln 17 des Spannfutters 1 anzugreifen bestimmt sind. In die untere Stirnfläche 32 der Spannzange 2 sind vier Zentriernuten eingelassen, die in der Lage und Form mit den am Spannfutter 1 angeordneten Zentrierzapfen 12a, 12b, 12c, 12d korrespondierenden und dem Positionieren der Spannzange 2 in X- und Y-Richtung wie auch bezüglich der Winkellage um die Z-Achse dienen. Von den vier Zentriernuten sind aus dieser Darstellung jedoch nur die zwei vorderen Zentriernuten 26a, 26b ersichtlich. In die Stirnfläche 32 der Spannzange 2 ist im weiteren eine aus dieser Darstellung nicht ersichtliche Indexieröffnung eingelassen, die der Aufnahme des am Spannfutter 1 angeordneten Indexierstifts 14 dient. Ein den Mittelteil der Spannhülse 2 bildender Schaft 27 ist mit einer radialen Durchgangsbohrung 28 versehen, durch welche sich die Welle 6 erstrecken kann.

Die Hülse 3 ist auf der Unterseite mit einem umlaufenden Bund 36 versehen ist, der auf der Unterseite eine kreisringförmig verlaufende, den Z-Anschlag bildende Stirnfläche 41 aufweist. In diese Stirnfläche 41 sind ebenfalls vier Zentriernuten eingelassen sind, die in der Lage und Form mit den am Spannfutter 1 angeordneten Zentrierzapfen 12a, 12b, 12c, 12d korrespondieren. Von den vier Zentriernuten sind aus dieser Darstellung wiederum nur die vorderen zwei Zentriernuten 37a, 37b ersichtlich. Die in ihrem Innern hohl ausgebildete Hülse 3 kann auf die Zugstange 8 aufgeschoben werden. Die Hülse 3 ist im weiteren mit einer radialen Durchgangsbohrung 39 versehen, durch welche die zum Übertragen der Spannkraft vorgesehene Welle 6 führbar ist. Die Hülse 3 ist auf der Oberseite mit einer planen Auflagefläche 40 versehen, in die drei Bohrungen eingelassen sind, wobei die mittlere Bohrung vorzugsweise als Gewindebohrung ausgebildet ist. In diesen Bohrungen können beispielsweise Passstifte aufgenommen werden, mittels welchen ein zum Fixieren des Werkstücks vorgesehener Formeinsatz in Bezug auf seine Lage um die Z-Achse positioniert und/oder fixiert werden kann. Die Auflagefläche 40 der Hülse 3 dient als Z-Anschlag für in der Spannzange 2 einzuspannende Werkstücke. Der Federring 4 wird auf die Hülse 3 aufgeschoben und dient dem axialen Fixieren der Hülse 3, wie nachfolgend noch näher erläutert wird. Der Spannring 5 ist ebenfalls mit einer axialen Durchgangsbohrung 33 versehen, welche der kraftschlüssigen Aufnahme der zum Übertragen der Spannkraft vorgesehene Welle 6 dient. Auf der Innenseite ist der Spannring 5 mit einer Verjüngung 34 versehen, mittels welcher ein radiales Verschieben der Klemmbacken 23a, 23b, 23c, 23d der Spannzange 2 ermöglicht wird, wenn der Spannring 5 gegen die Spannzange 2 gedrückt wird.

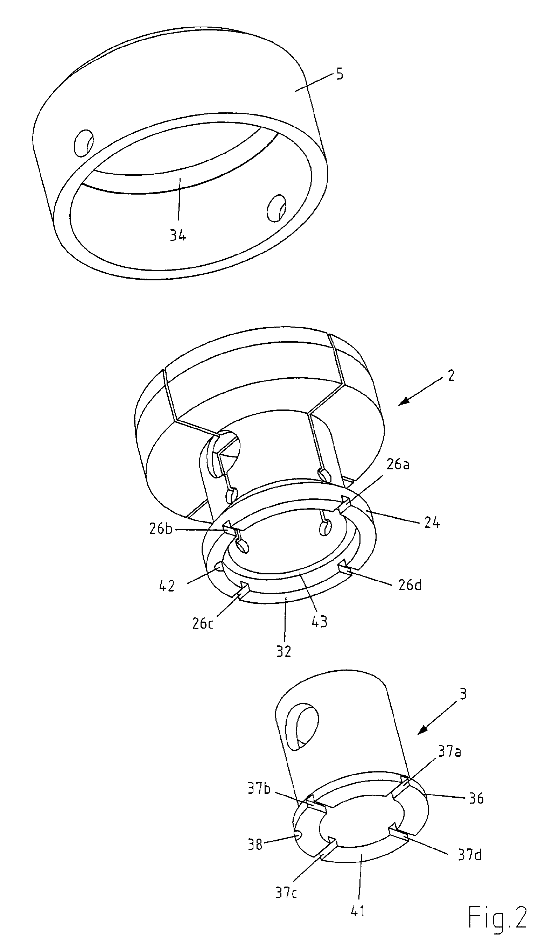

Die Fig. 2 zeigt die Spannzange 2, die Hülse 3 sowie den Spannring 5 in einer Ansicht von unten. Aus dieser Darstellung sind insbesondere die kreisringförmig verlaufenden, den jeweiligen Z-Anschlag bildenden Stirnflächen 32, 41 der Spannzange 2 bzw. Hülse 3 mitsamt den vier jeweils darin eingelassenen Zentriernuten 26a, 26b, 26c, 26d bzw. 37a, 37b, 37c, 37d ersichtlich. Zudem ist auch die Indexieröffnung 38 der Hülse 3 sowie die Indexieröffnung 42 der Spannzange 2 ersichtlich. Im weiteren ist ein auf der Innenseite der Spannzange 2 in die Schulter 24 eingelassener Absatz 43 ersichtlich, der dem axialen Abstützen des Federrings 4 dient. Schliesslich ist auf der Innenseite des Spannrings 5 die Verjüngung 34 ersichtlich.

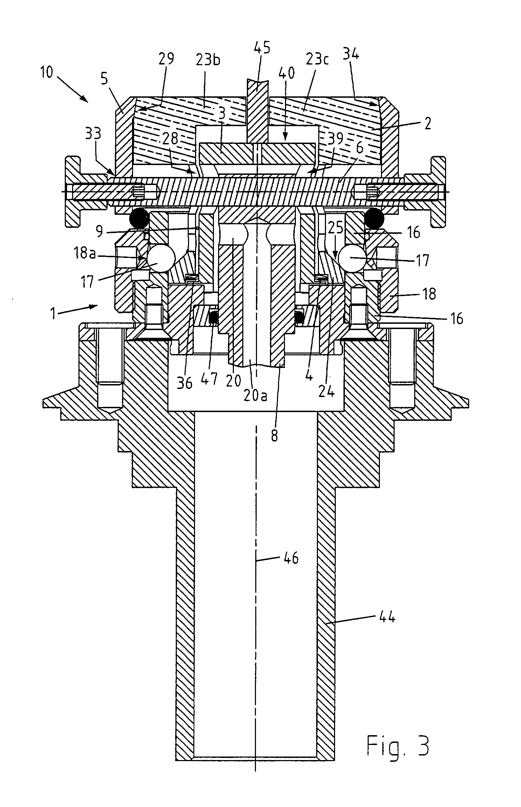

Die Fig. 3 zeigt einen Längsschnitt durch das Spannfutter 1 sowie die daran festgespannte Spannzange 2. In der Spannzange 2 ist ein andeutungsweise eingezeichnetes Werkstück 45 fixiert. Das Werkstück 45 stützt sich an der Auflagefläche 40 der Hülse 3 ab, wodurch dieses in Z-Richtung positioniert ist. Aus dieser Darstellung ist zudem eine maschinenseitige Aufnahme 44 ersichtlich, an der das Spannfutter 1 festgeschraubt ist. Die Längsmittelachse bzw. Z-Achse der Spanneinrichtung 10 ist mit dem Bezugszeichen 46 versehen. Beim Aufschrauben der Überwurfmutter 18 auf den Kugelhalter 16 werden die Spannkugeln 17 durch die konisch zulaufende Druckfläche 18a der Überwurfmutter 18 radial nach innen gedrückt. Die Spannkugeln 17 ihrerseits drücken dabei auf die Druckfläche 25 der Schulter 24 der Spannzange 2, so dass diese in Z-Richtung gegen das Spannfutter 1 gedrückt wird. Über den Federring 4 wird die mittels der Spannkugeln 17 ausgeübte Spannkraft auf den Bund 36 der Hülse 3 übertragen, wodurch diese ebenfalls in Z-Richtung gegen das Spannfutter 1 gedrückt wird. Dabei dringen die vier Zentrierzapfen 12a, 12b, 12c, 12d des Spannfutters 1 in die Zentriernuten 26a, 26b, 26c, 26d der Spannzange 2 und in die Zentriernuten 37a, 37b, 37c, 37d der Hülse 3 ein und richten diese in X- und in Y-Richtung sowie bezüglich der Winkellage um die Z-Achse aus. Die Zentriernuten 26a, 26b, 26c, 26d der Spannzange 2 wie auch die Zentriernuten 37a, 37b, 37c, 37d der Hülse 3 sind derart dimensioniert und auf die Zentrierzapfen 12a, 12b, 12c, 12d des Spannfutters 1 abgestimmt, dass bei lose aufgesetzter Spannzange 2 bzw. Hülse 3 die Zentrierzapfen 12a, 12b, 12c, 12d des Spannfutters 1 soweit in die Zentriernuten der Spannzange 2 bzw. Hülse 1 eindringen, dass zwischen den Z-Auflageflächen 13a, 13b, 13c, 13d des Spannfutters 1 und den ringförmigen Stirnflächen 32, 41 der Spannzange 2 bzw. der Hülse 3 ein Spalt in der Grössenordnung von 0.01 bis 0.1 mm besteht. Beim Festziehen der Überwurfmutter 18 wird dieser Spalt aufgehoben, indem die Zentrierzapfen 12a, 12b, 12c, 12d des Spannfutters 1 um den Betrag des Spalts tiefer in die Zentriernuten der Spannzange 2 bzw. Hülse 1 eindringen. Dabei macht man sich die Elastizität des Materials -Stahl- zu nutze, indem die Spannzange 2 bzw. die Hülse 3 durch die eindringenden Zentrierzapfen im Bereich ihrer Nuten geringfügig aufgeweitet werden. Diese Deformation spielt sich im Bereich der Materialelastizität ab, wodurch gänzlich auf Zentrierelemente verzichtet werden kann, die in Z-Richtung federelastisch nachgiebig sind. Nach dem Festziehen der Überwurfmutter 18 liegen sowohl die Spannzange 2 wie auch die Hülse 3 mit ihrer jeweiligen, kreisringförmig verlaufenden Stirnfläche 32, 41 auf den als Z-Auflage dienenden Auflageflächen 13a, 13b, 13c, 13d des Spannfutters 1 auf (Fig. 1). Wie bereits erwähnt, ist die als Z-Auflage dienende Hülse 3 von der Spannzange 2 entkoppelt, indem zwischen der Hülse 3 und der Spannzange 2 ein ringförmig verlaufender Spalt 9 besteht.

Der Durchmesser der durch den Spannring 5 führenden Bohrung 33 entspricht zumindest annähernd dem Aussendurchmesser der Spannwelle 6, so dass die Spannwelle 6 kraftschlüssig mit dem Spannring 5 verbunden ist. Die Zugstange 8 ihrerseits ist ebenfalls kraftschlüssig mit der Spannwelle 6 verbunden, während zwischen der Spannwelle 6 und der Durchgangsbohrung 39 der Hülse 3 wie auch zwischen der Spannwelle 6 und der Durchgangsbohrung 28 der Spannzange 2 ein ringförmiger Spalt besteht, so dass weder die Spannzange 2 noch die Hülse 3 kraftschlüssig mit der Spannwelle 6 verbunden sind. Wird die Zugstange 8 nach unten in Richtung der Aufnahme 44 gezogen, so wird die Zugkraft über die Spannwelle 6 auf den Spannring 5 übertragen. Dabei drückt die Verjüngung 34 des Spannrings 5 auf die Abschrägung 29 der Spannzange 2, wodurch deren Klemmbacken 23b, 23c radial zusammengedrückt werden und das in der Spannzange 2 aufgenommene Werkstück 45 fixiert wird. Der Winkel der Verjüngung 34 des Spannrings 5 ist vorzugsweise so gewählt, dass eine selbsthemmende Verbindung zwischen dem Spannring 5 und den Klemmbacken 23b, 23c des Spannfutters 2 besteht, so dass ein in der Spannzange 2 eingespanntes Werkstück 45 auch nach dem Aufheben der Zugkraft darin fixiert bleibt.

Die Zugstange 8 ist mit einer axialen Bohrung 20a versehen, die in eine radiale Bohrung 20 mündet. Diese Bohrungen 20, 20a dienen dem Zuführen einer Spülflüssigkeit, damit etwaige Rückstände und Verunreinigungen wie beispielsweise Späne aus der Spanneinrichtung 1 ausgespült werden können. Um zu Verhindern, dass Spülflüssigkeit nach unten in die Aufnahme 44 gelangt, ist das Spannfutter 1 auf der Innenseite mit einer die Zugstange 8 radial umfassenden Dichtung 47 versehen.

Die erfindungsgemäss ausgebildete Spannzange 2 kann direkt, einfach, schnell und positionsgenau an einem Spannfutter 1 fixiert werden. Durch das Vorsehen einer als Z-Anschlag für ein im Spannfutter 1 einzuspannendes Werkstück 45 dienenden Hülse 3, welche sich auf die gleiche Z-Referenz am Spannfutter 2 bezieht wie die Spannzange 2, kann das Werkstück 45 präzise positioniert und in der Spannzange 2 fixiert werden. Durch die Kombination von Spannzange 2 und Hülse 3 können Werkstücke genau und mit einer hohen Reproduzierbarkeit in der Spannzange 2 fixiert werden. Zudem ist ein schneller Austausch der Spannzange 2 zwischen verschiedenen System möglich. Ein weiterer Vorteil besteht darin, dass kein Spannzapfen zum Fixieren der Spannzange 2 vorgesehen ist, wodurch die Spannzange 2 mit einem hohlzylindrischen Innenraum mit einem grossen Innendurchmesser versehen werden kann, der sich zur Aufnahme der Hülse 3 sowie der Spannwelle 6 eignet. Indem die Zentrierelemente 26a, 26b, 26c, 26d direkt an der Spannzange 2 angeordnet sind, kann auf das Zwischenschalten einer Palette verzichtet werden, wodurch die Spanneinrichtung 10 letztlich eine vergleichsweise geringe Bauhöhe besitzt und kostengünstig hergestellt werden kann.

Das Vorsehen einer manuell aufschraubbaren Überwurfmutter 18 zum Fixieren der Spannzange 2 und der Hülse 3 hat den Vorteil, dass die Spanneinrichtung 1 sehr kompakt aufgebaut ist und kostengünstig hergestellt werden kann. Anstelle einer manuell anzubringenden Überwurfmutter zum Fixieren der Spannzange könnte das Spannfutter 1 jedoch auch mit einem federbelasteten, pneumatisch oder hydraulisch verschiebbaren Spannkolben versehen werden, der auf der Innenseite mit einer konisch zulaufenden Druckfläche zum radialen Verschieben der Spannkugeln versehen ist. Es versteht sich, dass sowohl die Spannzange 2 wie auch die Hülse 3 mit Zentriernocken anstelle von Zentriernuten versehen werden könnten, wobei in diesem Fall am Spannfutter 1 entsprechende Zentriernuten vorgesehen würden müssten.

## Patentansprüche

1. Spanneinrichtung (10) mit einem Spannfutter (1) und einer daran festspannbaren Spannzange (2), welche letztere mit Zentrierelementen (26a, 26b, 26c, 26d) zum positionsgenauen Fixeren am Spannfutter (1) versehen ist, **dadurch gekennzeichnet, dass** die Spanneinrichtung (10) mit zumindest einem von der Spannzange (2) entkoppelten Mittel zum Bilden einer Z-Auflage für ein in der Spannzange (2) festspannbares Werkstück (45) versehen ist.

2. Spanneinrichtung (10) nach Anspruch 1, **dadurch gekennzeichnet, dass** das Mittel zum Bilden der Z-Auflage in Form einer auf der Innenseite der Spannzange (2) angeordneten Hülse (3) ausgebildet ist, deren Oberseite (40) die Z-Auflage bildet.

3. Spanneinrichtung (10) nach Anspruch 2, **dadurch gekennzeichnet, dass** die Spannzange (2) hohlzylindrisch ausgebildet ist und auf der Innenseite die Hülse (3) angeordnet ist, welche über ein Federelement (4) in Z-Richtung an der Spannzange (2) abgestützt ist, um zusammen mit dieser in Z-Richtung am Spannfutter (1) fixiert zu werden.

4. Spanneinrichtung (10) nach Anspruch 2 oder 3, **dadurch gekennzeichnet, dass** die zwischen der Spannzange (2) und der Hülse (3) ein radialer Spalt besteht.

5. Spanneinrichtung (10) nach einem der vorhergehenen Ansprüche, **dadurch gekennzeichnet, dass** die Spannzange (2) auf der Rückseite mit einer umlaufenden Schulter (24) versehen ist, an welcher Spannkugeln (17) des Spannfutters (1) anzugreifen bestimmt sind.

6. Spanneinrichtung (10) nach Anspruch 5, **dadurch gekennzeichnet, dass** die Schulter (24) mit einer schräg verlaufenden Druckfläche (25) versehen ist, an welcher die Spannkugeln (17) des Spannfutters (1) anzugreifen bestimmt sind.

7. Spanneinrichtung (10) nach einem der vorhergehenden Ansprüche, **dadurch gekennzeichnet, dass** die Spannzange (2) auf ihrer Rückseite mit einer kreisringförmig verlaufenden, die Z-Auflage bildenden Stirnfläche (32) versehen ist, an welcher die Zentrierelemente (26a, 26b, 26c, 26d) zum Positionieren der Spannzange (2) in X- und Y-Richtung angeordnet sind.

8. Spanneinrichtung (10) nach Anspruch 7, **dadurch gekennzeichnet, dass** in die Stirnfläche (32) der Spannzange (2), zum Positionieren derselben in X- und Y-Richtung wie auch bezüglich der Winkellage um die Z-Achse (46), zumindest drei Zentriernuten (26a, 26b, 26c, 26d) eingelassen sind.

9. Spanneinrichtung (10) nach Anspruch 8, **dadurch gekennzeichnet, dass** das Spannfutter (1) mit zu den Zentriernuten (26a, 26b, 26c, 26d) der Spannzange (2) korrespondierenden Zentriernocken (12a, 12b, 12c, 12d) versehen ist.

10. Spanneinrichtung (10) nach Anspruch 8 oder 9, **dadurch gekennzeichnet, dass** die Hülse (3) auf ihrer Rückseite mit einer kreisringförmig verlaufenden, die Z-Auflage bildenden Stirnfläche (41) versehen ist, welche mit Zentrierelementen (37a, 37b, 37c, 37d) zum Positionieren der Hülse (3) in X- und Y-Richtung wie auch bezüglich der Winkellage um die Z-Achse (46) versehen ist.

11. Spanneinrichtung (10) nach Anspruch 9 und 10, **dadurch gekennzeichnet, dass** die Spannzange (2) und die Hülse (3) mit je vier Zentriernuten (26a, 26b, 26c, 26d; 37a, 37b, 37c, 37d) zum Positionieren in X- und Y-Richtung wie auch bezüglich der Winkellage um die Z-Achse (46) versehen sind.

12. Spanneinrichtung (10) nach einem der Ansprüche 9 bis 11, **dadurch gekennzeichnet, dass** die Spannzange (2) auf der Innenseite mit einem kreisringförmig verlaufenden Absatz (43) und die Hülse (3) mit einem kreisringförmig verlaufenden Bund (36) versehen ist, der in der Lage mit dem Absatz (43) der Spannzange (2) korrespondiert, und dass zwischen dem Absatz (43) der Spannzange (2) und dem Bund (36) der Hülse (3) das Federelement (4) aufgenommen ist.

13. Spanneinrichtung (10) nach einem der vorhergehenden Ansprüche, **dadurch gekennzeichnet, dass** die Spannzange (2) mit einer Indexierbohrung (42) zum Bestimmen der groben Lage um die Z-Achse (46) versehen ist.

14. Spanneinrichtung (10) nach einem der vorhergehenden Ansprüche, **dadurch gekennzeichnet, dass** die Spannzange (2) und die Hülse (3) mit je einer radialen Durchgangsbohrung (28, 39) zum Durchführen einer Spannwelle (6) versehen sind.

15. Spanneinrichtung (10) nach einem der vorhergehenden Ansprüche, **dadurch gekennzeichnet, dass** das Spannfutter (1) mit zumindest drei Zentrierelementen (12a, 12b, 12c, 12d) versehen ist, welche mit den an der Spannzange (2) angeordneten Zentrierelementen (26a, 26b, 26c, 26d) bezüglich der Lage und Ausbildung korrespondieren, und dass das Spannfutter (1) mit einem mit Spannkugeln (17) versehenen Spannmechanismus zum Fixieren der Spannzange (2) am Spannfutter (1) versehen ist.

16. Spanneinrichtung (10) nach Anspruch 15, **dadurch gekennzeichnet, dass** das Spannfutter (1) mit einer Überwurfmutter (18) versehen ist, welche auf der Innenseite mit einer konisch zulaufenden Druckfläche (18a) zum radialen Verschieben der Spannkugeln (17) versehen ist.

17. Spanneinrichtung (10) nach Anspruch 16, **dadurch gekennzeichnet, dass** das Spannfutter (1) mit einem federbelasteten, pneumatisch oder hydraulisch verschiebbaren Spannkolben versehen ist, der auf der Innenseite mit einer konisch zulaufenden Druckfläche zum radialen Verschieben der Spannkugeln (17) versehen ist.

18. Spanneinrichtung (10) nach einem der Ansprüche 15 bis 17, **dadurch gekennzeichnet, dass** das Spannfutter (1) mit vier jeweils 90° um die Z-Achse zueinander versetzten Zentrierzapfen (12a, 12b, 12c, 12d) versehen ist, wobei zwischen zwei benachbarten Zentrierzapfen (12a, 12b; 12b, 12c; 12c, 12d; 12d, 12a) jeweils eine die Z-Auflage für die Spannzange (2) und/oder die Hülse (3) bildende Anschlagfläche (13a, 13b, 13c, 13d) angeordnet ist.

19. Spanneinrichtung (10) nach Anspruch 18, **dadurch gekennzeichnet, dass** die die Z-Auflage bildenden Anschlagflächen (13a, 13b, 13c, 13d) des Spannfutters (1) in radialer Richtung eine derartige Ausdehnung besitzen, dass beim Fixieren der Spannzange (2) zusammen mit der Buchse (3) sowohl die kreisringförmige Stirnfläche (32) der Spannzange (2) wie auch die kreisringförmige Stirnfläche (41) der Hülse (3) daran aufzuliegen kommt.

20. Spanneinrichtung (10) nach einem der Ansprüche 15 bis 19, **dadurch gekennzeichnet, dass** die Zentrierzapfen (12a, 12b, 12c, 12d) des Spannfutters (1) in radialer Richtung eine derartige Ausdehnung besitzen, dass sie beim Fixieren der Spannzange (2) zusammen mit der Buchse (3) am Spannfutter (1) sowohl in die Ausnehmungen (26a, 26b, 26c, 26d) der Spannzange (2) wie auch in die Ausnehmungen (37a, 37b, 37c, 37d) der Hülse (3) eingreifen.

21. Spanneinrichtung (10) nach einem der Ansprüche 15 bis 20, **dadurch gekennzeichnet, dass** die Spannzange (2), die Hülse (3) und ein relativ zur Spannzange (2) verschiebbarer Spannring (5) mit je einer radialen Durchgangsbohrung (28, 33, 39) zum Durchführen einer Spannwelle (6) versehen sind, wobei der Durchmesser der durch die Spannzange (2) und die Hülse (3) führenden Bohrung (28, 39) grösser ist, als der Durchmesser der durch den Spannring (5) führenden Bohrung (33), und wobei der Durchmesser der durch den Spannring (5) führenden Bohrung (33) zumindest annähernd dem Aussendurchmesser der Spannwelle (6) entspricht, so dass die Spannwelle (6) kraftschlüssig mit dem Spannring (5) verbindbar ist.
